# EUROPÄISCHE PATENTSCHRIFT

(11) **EP 1 238 451 B1**
(45) Veröffentlichungstag und Bekanntmachung des Hinweises auf die Patenterteilung: **07.05.2003**
(21) Anmeldenummer: 00993293.0
(22) Anmeldetag: 29.11.2000
(51) Int. Cl.: H02G 15/00

(54) **DICHTUNGSKÖRPER FÜR LÄNGSGETEILTE KABELGARNITUREN**
SEALING BODY FOR LONGITUDINALLY SPLIT CABLE FITTINGS
CORPS D'ETANCHEITE POUR GARNITURES DE CABLE REPARTIES EN LONGUEUR

(30) Priorität: 02.12.1999 DE 19958112; 03.03.2000 DE 10010452
(43) Veröffentlichungstag der Anmeldung: 11.09.2002
(73) Patentinhaber: CCS Technology, Inc., Wilmington, DE 19803 (US)
(72) Erfinder: MÜLLER, Thorsten, 58708 Menden (DE); ZIMMER, Rainer, 58579 Schalksmühle (DE)
(74) Vertreter: Sturm, Christoph, Dipl.-Ing.
(86) Internationale Anmeldenummer: DE0004243
(87) Internationale Veröffentlichungsnummer: WO01041276

(56) Entgegenhaltungen:
- EP-A- 0 219 072
- EP-A- 0 408 967
- EP-A- 0 923 178

## Beschreibung

Die Erfindung betrifft einen aus mehreren Segmenten bestehenden Dichtungskörper für längsgeteilte Kabelgarnituren.

Aus der EP 0 408 967 A, welche als nächstliegender Stand der Technik anzusehen ist, ist ein Dichtungskörper für längsgeteilte Kabelgarnituren für den Einsatz in ein einfach geschlitztes Muffenrohr bekannt. Der Dichtungskörper ist in Einführungsrichtung gesehen mehrfach geteilt, wobei in den Trennungsebenen Kabeleinführungsöffnungen angeordnet sind. Weiterhin ist eine Kabelabfangvorrichtung angeordnet, die aus Druckplatten gebildet ist, welche in einer Keilkammer geführt werden. Diese Druckplatten werden auf die eingeführten Kabel aufgepresst, so daß auf die Kabel einwirkende Zug- oder Druckkräfte abgefangen werden können.

Weiterhin sind Dichtungskörper bekannt, die zunächst eine geschlossene Fläche aufweisen und in die erst bei Bedarf Kabeleinführungsöffnungen eingeschnitten oder eingebohrt werden. Dies gestaltet sich jedoch umständlich und ist sehr zeitintensiv. Außerdem ist dann das Abdichten der Trennebenen zwischen dem Kabel und den umgebenden Wandungen des Dichtungskörpers schwierig und wird meist mit zusätzlichem Aufbringen von Dichtungsmaterialien bewerkstelligt. Wenn Kabeleinführungsöffnungen bereits vorhanden sind, muß jeweils bei der Abdichtung das Dichtungsmaterial auf den jeweiligen Kabeldurchmesser genau angepaßt werden. Dadurch ergeben sich erhebliche Fehlerquellen. Außerdem ist das Verschließen der Dichtungskörpersegmente bei geteilten Dichtungskörpern sehr aufwendig bezüglich der Montage, da ein genauer gegenseitiger Sitz gewährleistet werden muß.

Für vorliegende Erfindung stellt sich die Aufgabe, einen segmentiert aufgebauten Dichtungskörper für Kabelgarnituren zu schaffen, bei dem eine einfache, schnelle und fehlerfreie Montage der einzelnen Dichtungskörpersegmente gewährleistet wird, und bei dem auch die Abdichtung in einfacher und sicherer Weise erfolgen kann. Die gestellte Aufgabe wird nun gemäß der Erfindung mit einem Dichtungskörper der eingangs erläuterten Art dadurch gelöst, daß die Dichtungskörpersegmente gegenseitig aufeinander wirkende Rastelemente aufweisen, daß verformbare Dichtungsblöcke in den Bereichen der Kabeleinführungsöffnungen angeordnet sind, daß Druckelemente vorgesehen sind, die an den Dichtungsblöcken anliegen und mit Druck ausübenden Elementen unter Verformung der Dichtungsblöcke gegen diese drückbar sind, um die Dichtungsblöcke ihrerseits unter Abdichten der Kabeleinführungsöffnungen gegen ein einlegbares Kabel und gegen die Dichtungskörpersegmente zu drücken, daß mindestens eine Federscheibe mit konisch in die Kabeleinführungsöffnungen gerichteten Federelementen zur Verformung der Dichtungsblöcke angeordnet ist, und daß Führungen im Bereich jeder Kabeleinführungsöffnung angeordnet sind, in welche senkrecht zur Kabeleinführungsrichtung verschiebbare Gleitstücke eingesetzt sind, an welchen Gleitstücken ein einsetzbares Kabel zu dessen Abfangung befestigbar ist.

Der in Einführungsrichtung geteilte Dichtungskörper gemäß der Erfindung besteht aus mindestens zwei, vorzugsweise drei Dichtungskörpersegmenten, wobei jedes Dichtungskörpersegment korrespondierend zum nächsten anliegenden Dichtungskörpersegment bereits vorgefertigte Kabeleinführungsöffnungen aufweist. Außerdem ist in den Bereichen der Kabeleinführungsöffnungen bereits Dichtungsmaterial in Form von verformbaren Dichtungsblöcken, vorzugsweise aus einer gelartigen Dichtungsmasse, integriert. Zur besseren Handhabung und zur Vermeidung loser Teile weisen die Dichtungskörpersegmente integrierte Führungen auf, die aus einer Führungsnut und einer darin gleitenden Federleiste gebildet werden. Dadurch können die einzelnen Dichtungskörpersegmente bei der Montage und Einführung der Kabel gegeneinander verschoben werden. Weiterhin sind an den Kabeleinführungsöffnungen auf der Außenseite des Dichtungskörpers Zentriereinrichtungen aus federnd konisch nach innen zulaufenden Zungen angeordnet, durch die eine Zentrierung der einführbaren Kabel innerhalb der Kabeleinführungsöffnungen erfolgt. Die in den Bereichen der Kabeleinführungsöffnungen eingesetzten Dichtungsblöcke aus verformbarem Dichtungsmaterial bzw. Dichtungsmasse werden seitlich von mindestens einer Federscheibe begrenzt, wobei diese Federscheibe in den Bereichen der Kabeleinführungen mit konisch zu den Dichtungsblöcken gerichteten Federelementen versehen sind, die beim Schließen des Dichtungskörpers Druck auf die Dichtungsblöcke ausüben. Dadurch erfolgt zusätzlich zu dem von den Druckelementen ausgeübten Druck ein seitlich einwirkender Druck, so daß die verformbare Dichtungsmasse dichtend an die einführbaren Kabel angepresst wird. Auch hier haben diese Federelemente zusätzlich eine zentrierende Wirkung auf die einführbaren Kabel. Die Ausübung des Druckes auf das Druckelement zur Verformung der Dichtungsmasse erfolgt mit Hilfe eines Keils, der durch Einpressen auf das Druckelement wirkt, wie später näher erläutert wird. Auf der Innenseite des Dichtungskörpers befinden sich in den Bereichen der Kabeleinführungsöffnungen Führungen, in die auf die Kabel aufgebrachte Kabelabfangvorrichtungen senkrecht zur Kabeleinführungsöffnung gleitend eingesetzt werden können. Durch das Gleiten innerhalb der Führungen kann eine Anpassung auf den jeweiligen Kabeldurchmesser vorgenommen werden. Das Verschließen des erfindungsgemäßen Dichtungskörpers erfolgt durch Zusammenschieben der einzelnen Dichtungskörpersegmente, wobei Führungen und Rastelemente zur gegenseitigen Fixierung dienen. Diese Rastelemente weisen zusätzlich nach außen gerichtete, verdeckte Entriegelungsansätze auf, so daß auch ein Wiederöffnen im Falle einer nachträglichen Kabelmontage ermöglicht werden kann. Außerdem sind Zentriernasen angeordnet, die ein Verdrehen der einzelnen Dichtungskörpersegmente gegeneinander verhindern. Nicht benutzte Kabeleinführungsöffnungen werden in einfacher Weise mit Blindstopfen verschlossen. Diese Blindstopfen sind so gestaltet, daß jeweils die komplette Kabeleinführungsöffnung verschlossen wird und auf diese Weise das dahinter liegende Dichtungsmaterial vor äußeren Einflüssen geschützt wird. Zur Befestigung des Dichtungskörpers, und damit der Kabelgarnitur an einem Tragseil, Mast oder an einer Wand sind auf der Außenseite Befestigungselemente vorgesehen. Im Innenbereich des Dichtungskörpers sind Befestigungspunkte vorgesehen, an die Verbindungsschienen zur gegenseitigen Fixierung der stirnseitigen Dichtungskörper angesetzt werden können. Der Dichtungskörper gemäß der Erfindung dient insgesamt zur stirnseitigen Abdichtung eines Muffengehäuses, das typischerweise aus einem längsgeteilten Muffenrohr besteht, das entlang seiner Längsteilung Verschiußelemente aufweist.

Die Erfindung wird nun anhand von Zeichnungen näher erläutert. Es zeigen:
- Figur 1: den Dichtungskörper im geöffneten Zustand;
- Figur 2: den Dichtungskörper im geschlossenen Zustand;
- Figur 3: das mittlere Dichtungskörpersegment;
- Figur 4: ein äußeres Dichtungskörpersegment;
- Figur 5: einen Dichtungsblock für ein äußeres Dichtungskörpersegment;
- Figur 6: eine Federscheibe;
- Figur 7: den Einsatz eines Druckelementes in einem äußeren Dichtungskörpersegment;
- Figur 8: ein Druckelement;
- Figur 9: einen Keil mit Abdeckung für die Betätigung des Druckelementes;
- Figur 10: einen Keil ohne Abdeckung;
- Figur 11: den Einsatz von Blindstopfen in den Kabeleinführungsöffnungen des mittleren Dichtungskörpersegments;
- Figur 12: ein Ausführungsbeispiel einer Mechanik zur axialen Verpressung eines in einem der äußeren Dichtungskörpersegmente vorhandenen Blocks aus Dichtungsmasse;
- Figur 13: die in Fig. 12 dargestellte und die dazu korrespondierende Verpressmechanik des mittleren Dichtungskörpersegments vor dem Zusammenfügen der beiden Komponenten und
- Figur 14: die zusammengefügten Dichtungselemente des äußeren und des mittleren Dichtungskörpersegments.

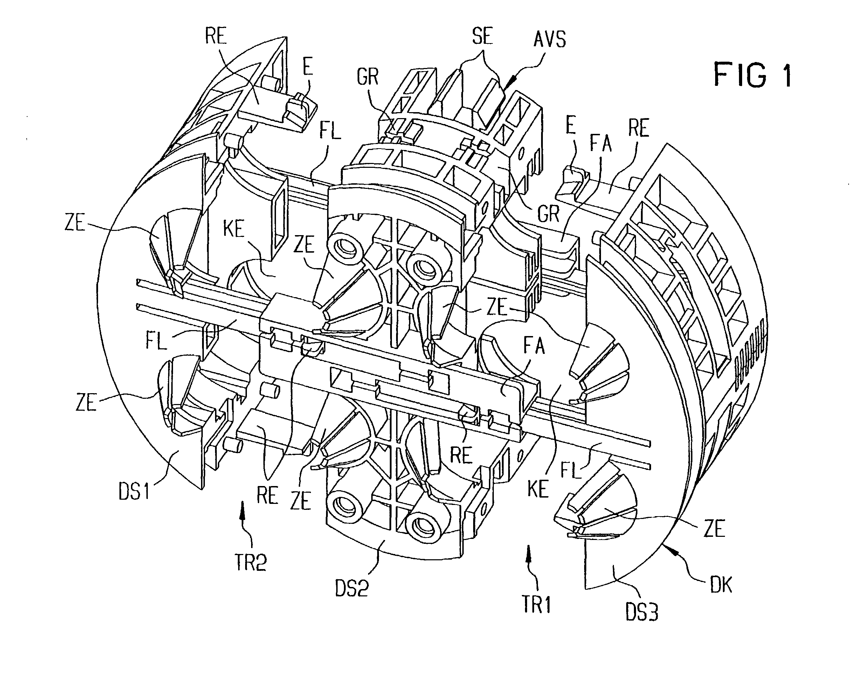

In Figur 1 ist ein Dichtungskörper DK gemäß der Erfindung aus drei Dichtungskörpersegmenten DS1, DS2 und DS3 dargestellt, wobei hier der offene Zustand vorliegt. Das mittlere Dichtungskörpersegment DS2 ist auf der im eingebauten Zustand nach außen gerichteten Seite mit einer Führungsaufnahme FA versehen, in die Führungsleisten FL mit Rastelementen RE der äußeren Dichtungskörpersegmente DS1 und DS3 eingeschoben werden, bis sie in der Endstellung eingerastet werden. Durch diese Führung ist gewährleistet, daß die Lagezuordnung bereits im Montagevorgang festgelegt ist, so daß sich für den Monteur bei dem Zusammenbau eine wesentliche Erleichterung ergibt. Durch die Teilung des Dichtungskörpers DK in drei Dichtungskörpersegmente DS1, DS2 und DS3 ergeben sich zwei Trennebenen TR1 und TR2, in denen hier jeweils zwei bereits offene Kabeleinführungsöffnungen KE angeordnet sind, so daß das bisher übliche Ausschneiden oder Bohren zur Herstellung von Kabeleinführungsöffnungen entfällt. Die umlaufenden Ränder der Kabeleinführungsöffnungen KE sind mit Zentriereinrichtungen versehen, die bei diesem Beispiel aus nach außen abstehenden, spitzen Zungen ZE bestehen, wobei diese Zungen ZE konisch die Kabeleinführungsöffnungen KE verengend angeordnet sind. Bei der Einführung der Kabel werden diese durch die federnden Zungen ZE innerhalb der Kabeleinführungsöffnungen KE zentriert. Auch hierdurch ergibt sich eine wesentliche Montageerleichterung. Weiterhin sind zusätzlich zu den mittig angeordneten Rastmechanismen aus Führungsleisten FL mit Rasteiementen RE auch Rastelemente RE in der gleichen Weise an den äußeren Dichtungskörpersegmenten DS1 und DS2 angeordnet, die beim Verschließen des Dichtungskörpers DK in entsprechende Gegenrasten GR des mittleren Dichtungskörpersegmentes DS2 eingerastet werden. Durch diese Maßnahme und Rastausbildungen ergeben sich wiederum Montageerleichterungen, da zusätzliche Verspannungsmittel zumindest im Montagevorgang nicht benötigt werden. Um die Dichtungskörpersegmente DS1, DS2 und DS3 im Bedarfsfall auch wieder von einander lösen zu können, sind an den Rastelementen RE entsprechende Entriegelungsansätze E angebracht, die eingedrückt werden können und dadurch die Verriegelung lösen. Im mittleren Dichtungskörpersegment DS2 ist eine Ansatzmöglichkeit AVS für Verbindungsschienen angeordnet, die in diesem Fall aus federnden Schnappelementen gebildet wird. Die zugehörige Verbindungsschiene wird durch Einschnappen fixiert.

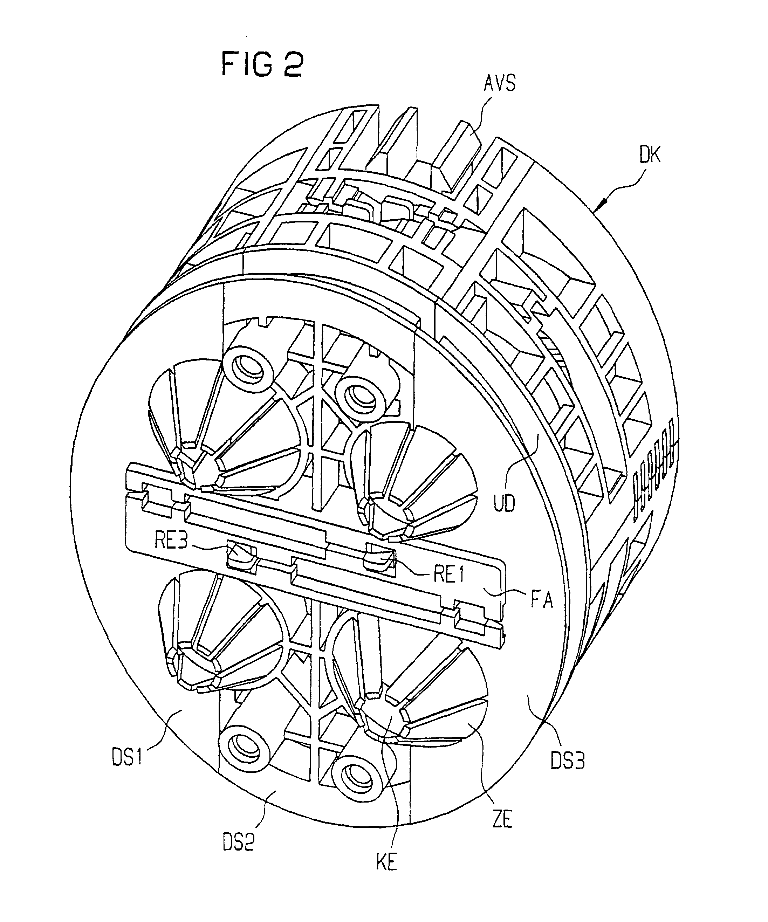

Figur 2 zeigt den Dichtungskörper DK in geschlossenem Zustand, woraus hervorgeht, daß eine umlaufende Dichtungsnut UD gebildet wird, in die eine Ringdichtung zur Abdichtung gegen das später aufzuziehende Muffenrohr eingesetzt wird. Die drei Dichtungskörpersegmente DS1, DS2 und DS3 sind bereits miteinander durch die Rastelemente fixiert, wobei hier jedoch nur noch die Rastelemente RE1 und RE3 zu erkennen sind, die in der Führungsaufnahme FA eingerastet sind. Die Kabeleinführungen KE sind von den konisch zulaufenden Zungen ZE der Zentriereinrichtungen umgeben.

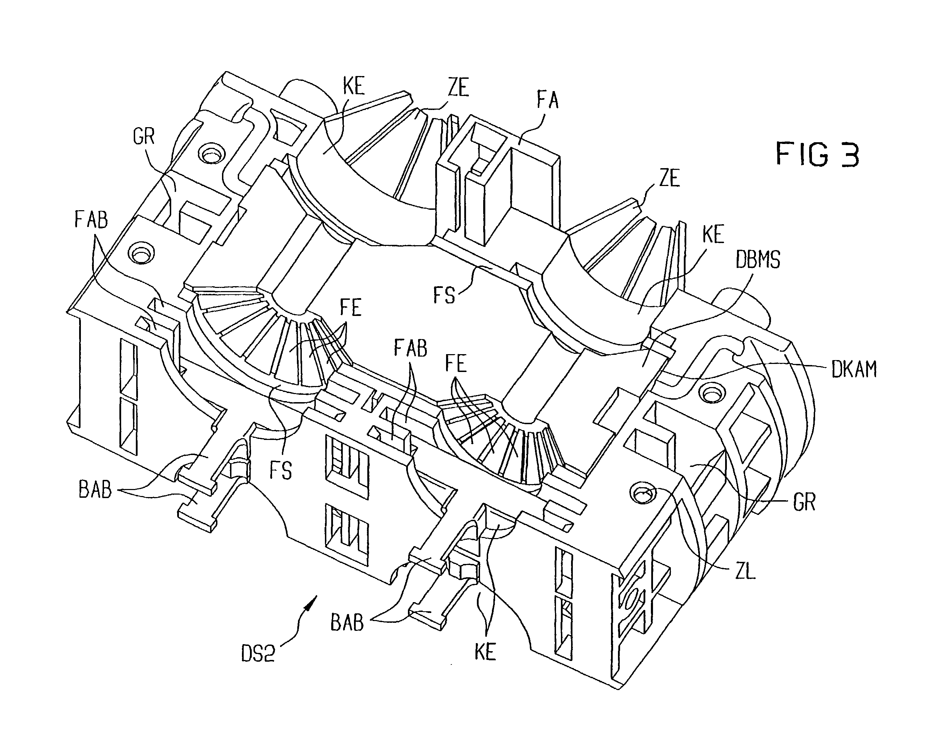

Figur 3 zeigt das mittlere Dichtungskörpersegment DS2, in dessen innerer Dichtungskammer DKAM ein Dichtungsblock DBMS aus verformbarem, vorzugsweise gelartigem Dichtungsmaterial eingelegt ist. In den Bereichen der Kabeleinführungen KE ist der Dichtungsblock DKAM jeweils mit nach einwärts gerichteten konisch verlaufenden Vertiefungen versehen, in die zungenförmige Federelemente FE einer inneren und einer äußeren Federscheibe FS bzw. FS' einwirken, wenn der Dichtungskörper insgesamt verschlossen, d.h. zusammengepresst wird. Weiterhin sind die Zentriereinrichtungen mit den federnden Zungen ZE an den Kabeleinführungen KE, die Führungsaufnahme FA für die Aufnahme der Führungsleisten der äußeren Dichtungskörpersegmente und die Gegenrasten GR für die Rastelemente der äußeren Dichtungskörpersegmente zu erkennen. An der beim Einbau des Dichtungskörpers nach einwärts gerichteten Seite des mittleren Dichtungskörpersegmentes DS2 sind in den Bereichen der Kabeleinführungen KE abstehende Bügel BAB angeordnet, an denen Kabelabfangvorrichtungen, die an den eingeführten Kabeln befestigt sind, oder die Kabel selbst festgeklemmt werden. Die an den Kabeln befestigten Kabelabfangvorrichtungen besitzen seitlich abstehend lamellenartige Ansätze, die in den schlitzartigen Führungen FAB des mittleren Dichtungskörpersegmentes DS2 eingesetzt werden. Die Lage dieser Kabelabfangvorrichtungen kann in den Führungen FAB zur Anpassung an den Durchmesser des jeweils eingeführten Kabels durch Verschiebung senkrecht zur Einführungsrichtung angepaßt werden. Die Kabelabfangvorrichtungen sind an sich bekannt und bestehen im Wesentlichen aus den seitlichen lamellenartigen Ansätzen, die mit Hilfe von Spannbändern auf die Kabel aufgepresst werden. Durch den Einsatz in die Führungen FAB und durch die Befestigung mit sog. Kabelbindern an den Bügeln BAB können Druck-, Zug- und Torsionskräfte abgefangen werden. In Zentrierlöcher ZL tauchen beim Zusammenbau des Dichtungskörpers entsprechende Zentriernasen der äußeren Dichtungskörpersegmente ein.

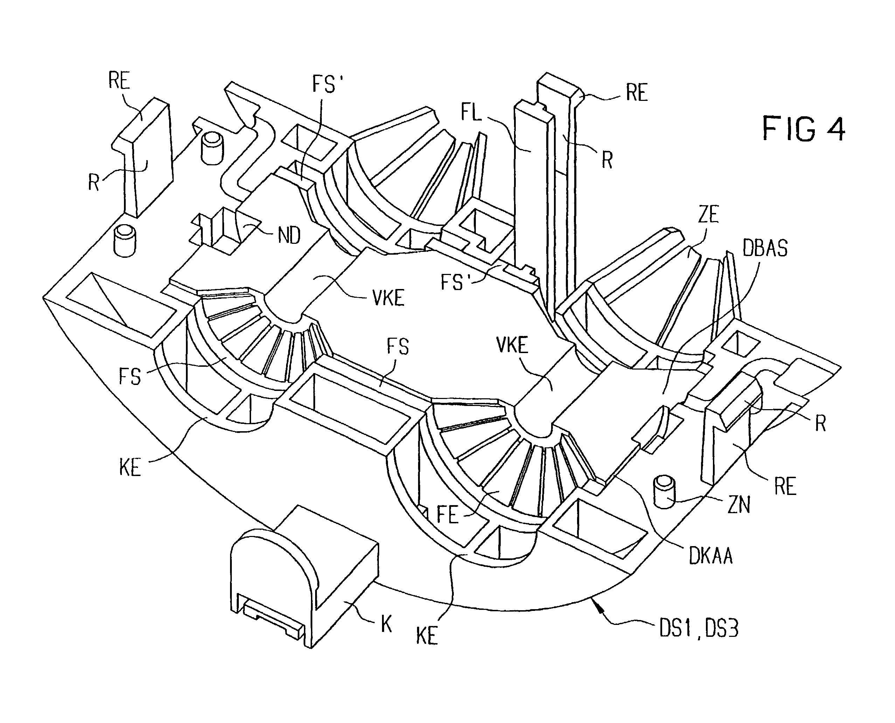

Figur 4 zeigt ein äußeres Dichtungskörpersegment DS1 bzw. DS3 mit einem in die äußere Dichtungskammer DKAA eingelegtem Dichtungsblock DBAS. Der Dichtungsblock DBAS besitzt in der Trennungsebene jeweils in den Bereichen der Kabeleinführungen KE vorgeformte Kabeleinführungen VKE, wobei diese beim späteren Verpressen entsprechend des Kabeldurchmessers verformt werden. Auch hier ragen zwei Paare jeweils zungenförmiger Federelemente in konisch verlaufende Vertiefungen des Dichtungsblockes DBAS. Beim Verschließen des Dichtungskörpers erfolgt eine Verformung entsprechend der Durchmesser der eingeführten Kabel, wobei die verformbare Dichtungsmasse bzw. das Dichtungsmaterial durch die Federelemente FE der beiden Federscheibe FS/FS' zusätzlichen Anpressdruck erfährt. Weiterhin haben diese Federelemente FE eine zentrierende Wirkung auf das jeweilige Kabel und verhindern außerdem ein Abfließen des verformbaren Dichtungsmaterials aus dem Dichtungsbereich. Jeder Dichtungsblock, hier der Dichtungsblock DBAS, ist auf seiner Außenseite mit einer umlaufenden Nut ND versehen, in die ein Druckelement von außen her auf den Dichtungsblock zur Verformung einwirken kann, wie später erläutert wird. Dieses Druckelement wird durch einen von außen einwirkenden Keil K nach einwärts in Richtung Dichtungsblock bzw. in Richtung der Kabel bewegt. Nahe des äußeren, umlaufenden Randes der Dichtungskörpersegmente DS1, DS3 sind Rasten R mit Rastelementen RE angeordnet, die zur Verriegelung mit dem mittleren Dichtungskörpersegment dienen. Die Zentriernasen ZN ragen beim Zusammenbau in entsprechende Zentrierlöcher des mittleren Dichtungskörpersegmentes. Die Führungsleiste FL, die Raste R mit dem Rastelement RE greifen beim Zusammenbau in die Führungsaufnahme des mittleren Dichtungskörpersegmentes ein. Auch hier sind jeweils die Hälften der Zentriereinrichtungen aus den konisch verlaufenden Zungen ZE zu erkennen.

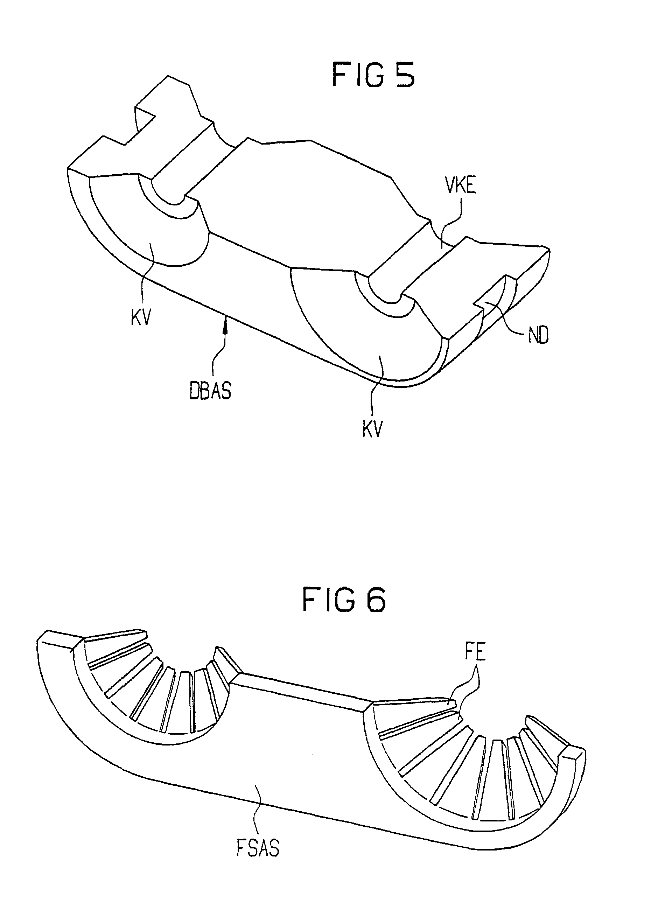

In Figur 5 ist ein Dichtungsblock DBAS für ein äußeres Dichtungskörpersegment dargestellt, wobei zwei dieser Dichtungsblöcke und ein entsprechend ähnlicher mittlerer Dichtungsblock, wie er in Figur 3 dargestellt ist, zu dem Gesamtdichtungsblock zusammengestellt sind. Es sind hier die in den Kabeleinführungsbereichen eingebrachten konischen Vertiefungen KV für die Aufnahme der Federelemente der beiden Federscheiben und jeweils der vorgeformte, jedoch nicht angepaßte Verlauf der Kabeleinführungen VKE erkennbar. Als verformbares Dichtungsmaterial wird vorzugsweise ein Stoff bzw. eine Stoffkombination in gelartiger Konsistenz verwendet, wie z.B. Polyurethan.

In Figur 6 ist eine geteilte Federscheibe FSAS dargestellt, die für zwei parallele Kabeleinführungen ausgelegt ist. Die Halbteilung dieser Federscheibe FSAS entspricht der Teilung der Dichtungskörpersegmente, wobei die Federscheibe für das mittlere Dichtungskörpersegment zwei übereinander liegende Halbkreise von Federelementen aufweist. Dadurch ist jeweils die Ergänzung zu einem Vollkreis gegeben und die konischen Vertiefungen der zusammengesetzten Dichtungskörperblöcke werden voll mit den Federelementen FE belegt.

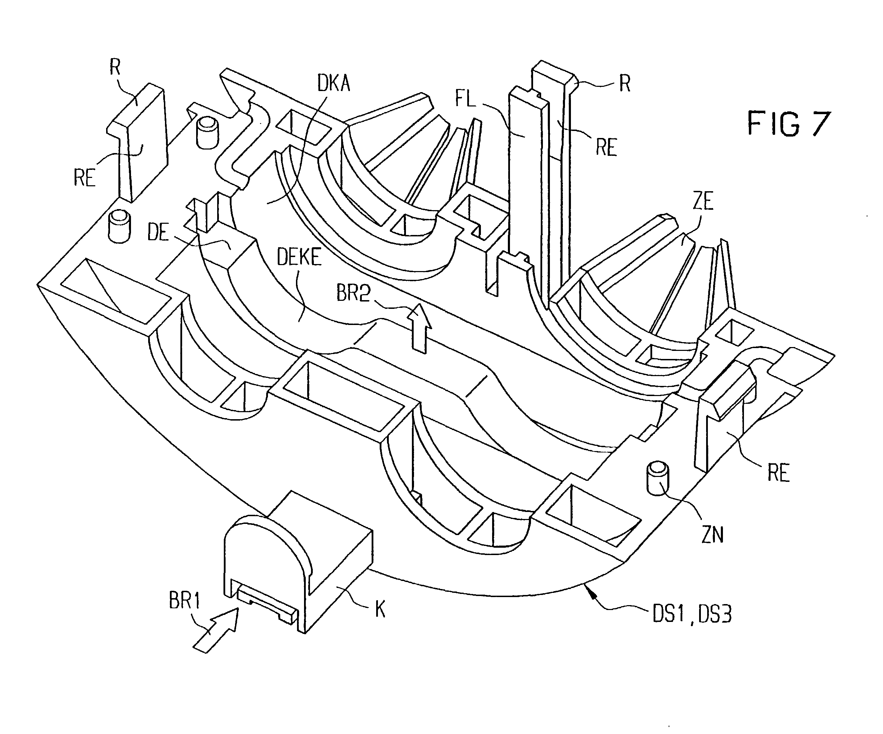

Figur 7 zeigt ein äußeres Dichtungskörpersegment DS1 bzw. DS2 ohne Dichtungsblock bei offener Dichtungskammer DKA, so daß das unter dem Dichtungskörperblock befindliche Druckelement DE sichtbar wird. Dieses Druckelement DE besitzt entsprechend der Bereiche für Kabeleinführungen Aussparungen DEKE, die so ausgelegt sind, daß auch bei großem Kabeldurchmesser noch Dichtungsmaterial zwischen dem Druckelement DE und dem Kabel verbleibt. Das Druckelement DE wird durch Einpressen eines Keils K in Richtung BR1 senkrecht dazu in Richtung BR 2 in die Dichtungskammer DKA nach einwärts in Richtung auf die eingeführten Kabel getrieben, wobei das Dichtungsmaterial für die nötige Abdichtung entsprechend verformt wird. Die seitlichen Begrenzungen für das Dichtungsmaterial bilden die hier nicht gezeigten Federscheiben.

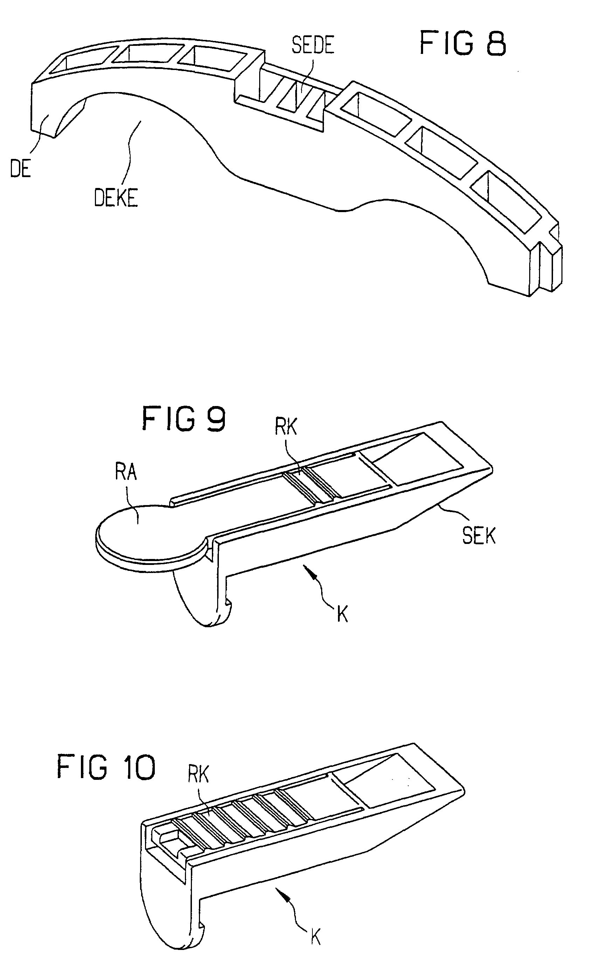

Figur 8 zeigt ein Druckelement DE mit den für maximalen Kabeldurchmesser ausgelegten Kabeleinführungen DEKA, wie es in den äußeren Dichtungskörpersegmenten eingesetzt wird. Im äußeren Mittelbereich des Druckelementes DE ist ein Einschnitt mit einer schiefen Ebene SEDE ausgebildet, auf die der in Figur 7 gezeigte Keil für die Richtungsänderung der Kraft einwirkt.

Figur 9 zeigt einen Keil K, der eine schiefe Ebene SEK aufweist, mit der die Einwirkung auf die schiefe Ebene des Drukkelementes erfolgt. Der Keil K ist mit Rasten RK versehen, die hier z.B. mit einer Rastabdeckung RA zum Teil verdeckt sind.

Figur 10 zeigt den Keil K mit Rasten RK bei abgenommener Abdeckung.

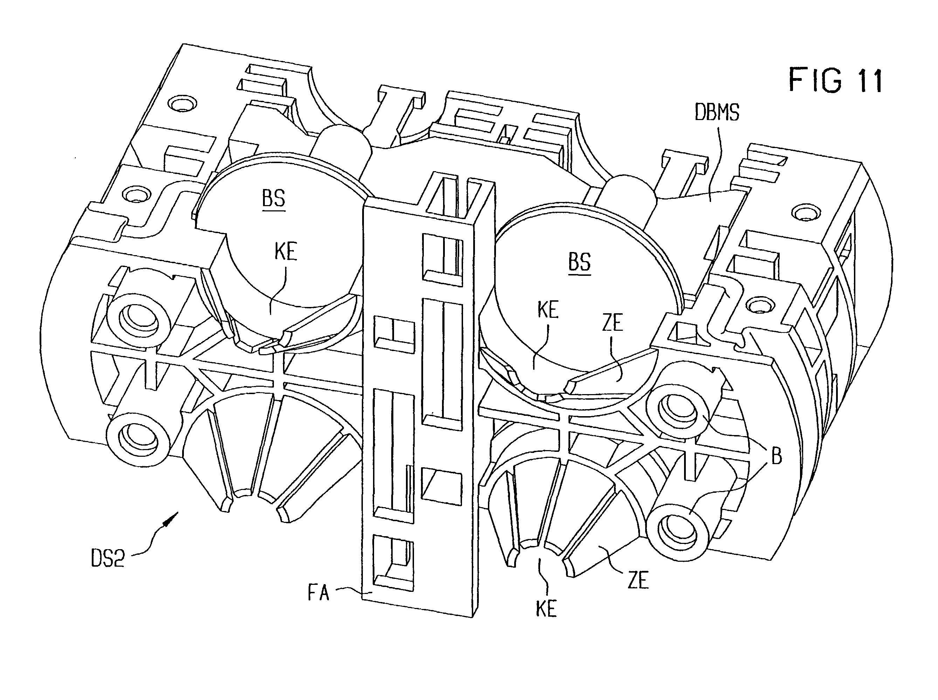

Figur 11 zeigt nochmals das mittlere Dichtunskörpersegment DS2, wobei hier die beiden oberen Kabeleinführungsöffnungen KE mit Blindstopfen BS verschlossen sind, da diese beispielsweise noch nicht belegt werden sollen. Damit ist gesichert, daß die dahinter liegenden Dichtungsblöcke - hier ist nur der Dichtungsblock DBMS sichtbar - beim Verschließen des Dichtungskörpers nicht aus den nicht belegten Kabeleinführungsöffnungen ausgepreßt wird. Weiterhin ist gezeigt, daß verschiedene Befestigungsmöglichkeiten B in der Frontseite angeordnet sind, an denen bzw. durch die Befestigungen an Wänden, Masten oder Tragseilen vorgenommen werden können.

Bei den bisher beschriebenen Ausführungsbeispielen wird die Abdichtung der in den Dichtungskörper eingeführten und dort abgefangenen Kabel durch die radiale Verpressung der als Dichtungsmaterial dienenden, gelartigen Substanz erreicht. Eine sichere Abdichtung der Kabel läßt sich selbstverständlich auch mittels eines in axialer Richtung auf den jeweiligen Dichtungsblock einwirkenden, die gelartige Substanz in radialer Richtung verdrängenden Stempels oder mittels eines platten- bzw. scheibenförmigen Elements bewerkstelligen.

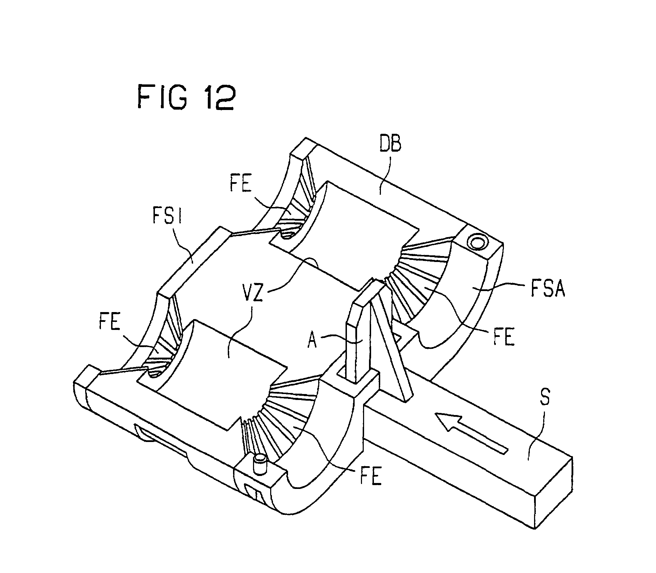

Wie in Fig. 12 dargestellt, kann die entsprechende, in den beiden äußeren Dichtungskörpersegmenten DS1/DS2 jeweils vorhandene Mechanik dann beispielsweise aus einer in axialer Richtung, also parallel zur Längsachse des Dichtungskörpers DK verschiebbaren äußeren Federscheibe FSA, einem an der äußeren Federscheibe FSA befestigten oder kraftschlüssig mit der Federscheibe FSA verbundenen Schieber S und einer sich an der Dichtungskammerwand abstützenden, inneren Federscheibe FSI bestehen. Form und Aufbau der Federscheiben FSA/FSI wurden bereits anhand der Fig. 6 erläutert. Das zwischen den beiden Federscheiben FSA/FSI angeordnete Dichtungsmaterial liegt wieder in Form eines Blockes DB vor. Der Dichtungsblock DB besitzt zwei der Kabelform angepasste, parallel verlaufende Vertiefungen VZ, welche jeweils in zwei sich kegelförmig nach außen erweiternde Ausnehmungen übergehen (siehe auch Fig. 5). In diese Ausnehmungen des Dichtungsblockes DB greifen die an den beiden Federscheiben FSA/FSI befestigten, als Verdränger, Zentrierhilfe und Auslaufschutz dienenden Federelemente FE passgenau ein.

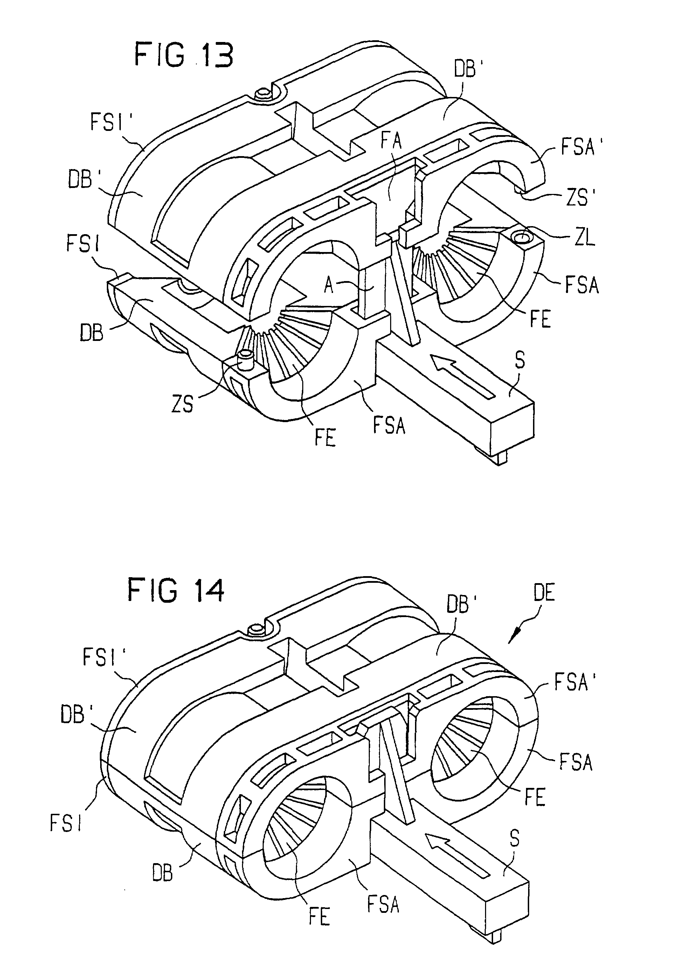

Der am Schieber S befestigte Ansatz A greift in eine Führung FA der korrespondierenden, im mittleren Dichtungkörpersegment DS2 vorhandenen Mechanik zur axialen Verpressung des Dichtungsblocks DB' ein (siehe Fig. 13). Diese Mechanik ist spiegelsymmetrisch bezüglich der im äußeren Dichtungskörpersegment DS1/DS3 angeordneten und in Fig. 12 dargestellten Verpressmechanik aufgebaut, besteht also ebenfalls aus einer äußeren Federscheibe FSA', einer inneren Federscheibe FSI' und den an den Federscheiben FSA'/FSI' befestigten, hier nicht sichtbaren, sich konisch nach innen verjüngenden Federelementen. Zentrierstifte und -löcher ZS/ZS'/ZL erleichtern das passgenaue Zusammenfügen der beiden Verpressmechaniken zu der in Fig. 14 gezeigten Einheit DE, wobei der in den Fig. 1 und 2 dargestellte Dichtungskörper DK insgesamt zwei dieser Einheiten DE enthält.

Durch Betätigung des Schiebers S werden die äußeren Federscheiben FSA/FSA' geführt durch die Wandung der Dichtungskammer gleichzeitig in Richtung der ihnen zugeordneten, unbeweglichen inneren Federscheiben FSI/FSI' verschoben und die gelartige Substanz der Dichtungsblöcke DB/DB' somit in radialer Richtung verdrängt. Gleichzeitig übt die Dichtungsmasse eine Gegenkraft auf die Federelemente FE aus, sodass sich diese an die abgefangenen Kabel anlegen und sie zentrieren. Außerdem schließen sich die zwischen jeweils benachbarten Federelementen FE vorhandenen Spalte, was das Entweichen der Dichtungsmasse aus der Kammer verhindert.

## Patentansprüche

1. Dichtungskörper für längsgeteilte Kabelgarnituren aus mehreren Dichtungskörpersegmenten, in deren Trennungsebenen Kabeleinführungsöffnungen und integrierte Kabelabfangvorrichtungen angeordnet sind,
**dadurch gekennzeichnet,**
**daß** die Dichtungskörpersegmente (DS1, DS2, DS3) Rastelemente (RE, FL, FN) aufweisen, mittels denen die Dichtungskörpersegmente (DS1, DS2, DS3) rastend miteinander verbunden sind,
**daß** verformbare Dichtungsblöcke (DBAS, DBMS) in den Bereichen der Kabeleinführungsöffnungen (KE) angeordnet sind,
**daß** Druckelemente (DE) vorgesehen sind, die an den Dichtungsblöcken (DBAS, DBMS) anliegen und unter Verformung derselben gegen diese drückbar sind, um die Dichtungsblöcke (DBAS, DBMS) ihrerseits unter Abdichten der Kabeleinführungsöffnungen (KE) gegen ein einlegbares Kabel und gegen die Dichtungskörpersegmente (DS1, DS2, DS3) zu drücken, daß mindestens eine Federscheibe (FS) mit konisch in die Kabeleinführungsöffnungen (KE) gerichteten Federelementen (FE) zur Verformung der Dichtungsblöcke angeordnet ist, und daß Führungen (FAB) im Bereich jeder Kabeleinführungsöffnung (KE) angeordnet sind, in welche senkrecht zur Kabeleinführungsrichtung verschiebbare Gleitstücke (BAB) eingesetzt sind, an welchen Gleitstücken (BAB) ein eingsetzbares Kabel zu dessen Abfangung befestigbar ist.

2. Dichtungskörper nach Anspruch 1,
**dadurch gekennzeichnet,**
**daß** die Dichtungsblöcke (DBAS, DBMS) aus einer gelartigen Substanz, vorzugsweise aus Polyurethan bestehen.

3. Dichtungskörper nach einem der vorhergehenden Ansprüche,
**dadurch gekennzeichnet,**
**daß** die Federelemente (FE) der Federscheibe (FS) als spitz zugeschnittene Zungen gebildet sind.

4. Dichtungskörper nach einem der vorhergehenden Ansprüche,
**dadurch gekennzeichnet,**
**daß** die Druckelemente (DE) in den zu den Dichtungsblöcken (DBAS, DBMS) weisenden Druckflächen in den Bereichen der Kabeleinführungsöffnungen (KE) bogenförmige Aussparungen aufweisen, und
**daß** die Druckelemente (DE) mittels rastbaren Keilen (K) , die in korrespondierende schiefe Ebenen (SEDE) der Druckelemente (DE) einpressbar sind, gegen die Dichtungsblöcke (DBAS, DBMS) drückbar sind.

5. Dichtungskörper nach einem der vorhergehenden Ansprüche,
**dadurch gekennzeichnet,**
**daß** zwei halbkreisförmige Dichtungskörpersegmente mit einer Trennebene zusammensetzbar sind.

6. Dichtungskörper nach einem der Ansprüche 1 bis 4,
**dadurch gekennzeichnet,**
**daß** zwei teilkreisförmige Dichtungskörpersegmente und ein Mittelteil zu einem Dichtungskörper (DK) zusammensetzbar sind.

7. Dichtungskörper nach einem der vorhergehenden Ansprüche,
**dadurch gekennzeichnet,**
**daß** in den Mittelbereichen der äußeren Dichtungskörpersegmente (DS1,DS3) mindestens eine Raste (R) mit Rastelementen (RE) und eine Führungsleiste (FL) und an dem anzufügenden mittleren Dichtungskörpersegment (DS2) eine Führungsaufnahme (FA) mit Gegenrasten für die Rastelemente (RE1, RE2) angeordnet sind.

8. Dichtungskörper nach einem der vorhergehenden Ansprüche,
**dadurch gekennzeichnet,**
**daß** die Federscheibe (FS) entsprechend der Dichtungskörpersegmente (DS1, DS2, DS3) ebenfalls geteilt ist und zwei nebeneinander angeordnete halbe Kabeleinführungsöffnungen umfaßt.

9. Dichtungskörper nach einem der vorhergehenden Ansprüche,
**dadurch gekennzeichnet,**
**daß** jeder Dichtungsblock (DBAS, DBMS) in den Bereichen der Kabeleinführungsöffnungen (KE) konisch verlaufende, den zentrierenden Federelementen (FE) entsprechend vorgeformte Vertiefungen (KV) und vorgeformte, halbe Kabeleinführungsöffnungen (VKE) aufweist.

10. Dichtungskörper nach einem der vorhergehenden Ansprüche,
**dadurch gekennzeichnet,**
**daß** jeder Dichtungsblock (DBAS, DBMS) eine äußere umlaufende Nut (ND) zur Aufnahme eines Druckelementes (DE) aufweist.

11. Dichtungskörper nach einem der vorhergehenden Ansprüche,
**dadurch gekennzeichnet,**
**daß** Rasten (R) mit Rastelementen (RE) zwischen den Kabeleinführungsöffnungen (KE) und jeweils an den äußeren Randbereichen der Dichtungskörpersegmente (DS1, DS2, DS3) angeordnet sind, wobei die Rasten (R) jeweils über die Trennebenen (TR1,TR2) hinausragen und beim Zusammenfügen der Dichtungskörpersegmente (DS1, DS2, DS3) in die korrespondierenden Gegenrasten (GR) des anzufügenden Dichtungskörpersegmentes einführbar sind.

12. Dichtungskörper nach einem der vorhergehenden Ansprüche,
**dadurch gekennzeichnet,**
**daß** die äußeren Dichtungskörpersegmente (DS1, DS3) Ansätze (AVS) zur Befestigung von Verbindungsschienen, die zur gegenseitigen Lagefixierung von zwei stirnseitigen Dichtungskörpern dient, aufweisen.

13. Dichtungskörper nach einem der vorhergehenden Ansprüche,
**dadurch gekennzeichnet,**
**daß** Befestigungen (B) an den Außenseiten der Dichtungskörpersegmente (DS1, DS2, DS3) zur Wand-, Mast- oder Tragseilbefestigung angeordnet sind.

14. Dichtungskörper nach einem der vorhergehenden Ansprüche,
**dadurch gekennzeichnet,**
**daß** Blindstopfen (BS) in nicht belegte Kabeleinführungsöffnungen (KE) einsetzbar sind.

15. Dichtungskörper nach einem der vorhergehenden Ansprüche,
**dadurch gekennzeichnet,**
**daß** Entriegelungselemente (E) an den Rastelementen (RE) angeordnet sind.

16. Dichtungskörper nach einem der vorhergehenden Ansprüche,
**dadurch gekennzeichnet,**
**daß** eine federnde Zentriereinrichtung für Kabel an jeder Kabeleinführungsöffnung (KE) angeordnet ist.

17. Dichtungskörper nach Anspruch 16,
**dadurch gekennzeichnet,**
**daß** die Zentriereinrichtung aus spitz zulaufenden, konisch nach einwärts in die Kabeleinführungsöffnung (KE) gerichteten Zungen (ZE) gebildet ist.

18. Dichtungskörper nach einem der vorhergehenden Ansprüche,
**dadurch gekennzeichnet,**
**daß** an den inneren Ausgängen der Kabeleinführungen (KE) abstehende Bügel (BAB) zum Befestigen der einführbaren Kabel und schlitzartige Führungen (FAB) für Ansätze der an den Kabeln befestigbaren Kabelabfangvorrichtungen angeordnet sind, wobei die Ansätze der Kabelabfangvorrichtungen und damit die Kabelabfangvorrichtung selbst in den Führungen (FAB) zur entsprechenden Positionierung verschiebbar sind.

## Claims

1. Sealing body for longitudinally split cable fittings comprising a number of sealing body segments, in the separating planes of which cable insertion openings and integrated cable holding devices are arranged, **characterized in that** the sealing body segments (DS1, DS2, DS3) have latching elements (RE, FL, FN), by means of which the sealing body segments (DS1, DS2, DS3) are connected to one another in a latching manner, **in that** deformable sealing blocks (DBAS, DBMS) are arranged in the regions of the cable insertion openings (KE), **in that** pressure elements (DE) are provided, which elements bear against the sealing blocks (DBAS, DBMS) and can be pressed against the latter, with said sealing blocks being deformed, in order to press the sealing blocks (DBAS, DBMS) against a cable which can be placed in and against the sealing body segments (DS1, DS2, DS3), with the sealing blocks for their part sealing the cable insertion openings (KE), **in that** at least one spring disc (FS) with spring elements (FE) directed conically into the cable insertion openings (KE) are arranged for deforming the sealing blocks, and **in that** guides (FAB) are arranged in the region of each cable insertion opening (KE), into which guides there are inserted sliding pieces (BAB) which can be displaced perpendicularly with respect to the direction of cable insertion, to which sliding pieces (BAB) an insertable cable can be fastened for holding the latter.

2. Sealing body according to Claim 1, **characterized in that** the sealing blocks (DBAS, DBMS) consist of a gel-like substance, preferably of polyurethane.

3. Sealing body according to one of the preceding claims, **characterized in that** the spring elements (FE) of the spring disc (FS) are formed as pointed tabs.

4. Sealing body according to one of the preceding claims, **characterized in that** the pressure elements (DE) have in the pressure surfaces facing the sealing blocks (DBAS, DBMS), in the regions of the cable insertion openings (KE), arc-shaped clearances, and **in that** the pressure elements (DE) can be pressed against the sealing blocks (DBAS, DBMS) by means of latchable wedges (K), which can be pressed into corresponding oblique planes (SEDE) of the pressure elements (DE).

5. Sealing body according to one of the preceding claims, **characterized in that** two semi-circular sealing body segments with a separating plane can be fitted together.

6. Sealing body according to one of claims 1 to 4, **characterized in that** two part-circular sealing body segments and a middle part can be fitted together to form a sealing body (DK).

7. Sealing body according to one of the preceding claims, **characterized in that** arranged in the middle regions of the outer sealing body segments (DS1, DS3) are at least one latch (R) with latching elements (RE) and a guiding strip (FL) and, on the middle sealing body segment (DS2) to be attached, a guiding receptacle (FA) with mating latches for the latching elements (RE1, RE2).

8. Sealing body according to one of the preceding claims, **characterized in that** the spring disc (FS) is likewise split in a way corresponding to the sealing body segments (DS1, DS2, DS3) and encloses two half cable insertion openings arranged next to each other.

9. Sealing body according to one of the preceding claims, **characterized in that** each sealing block (DBAS, DBMS) has in the regions of the cable insertion openings (KE) conically extending depressions (KV), preformed in a way corresponding to the centring spring elements (FE), and preformed, half cable insertion openings (VKE).

10. Sealing body according to one of the preceding claims, **characterized in that** each sealing block (DBAS, DBMS) has an outer peripheral groove (ND) for receiving a pressure element (DE).

11. Sealing body according to one of the preceding claims, **characterized in that** latches (R) with latching elements (RE) are arranged between the cable insertion openings (KE) and in each case at the outer edge regions of the sealing body segments (DS1, DS2, DS3), the latches (R) respectively protruding beyond the separating planes (TR1, TR2) and being able to be inserted into the corresponding mating latches (GR) of the sealing body segment to be attached when the sealing body segments (DS1, DS2, DS3) are joined together.

12. Sealing body according to one of the preceding claims, **characterized in that** the outer sealing body segments (DS1, DS3) have lugs (AVS) for the fastening of connecting rails, which serve for the mutual positional fixing of two sealing bodies at the ends.

13. Sealing body according to one of the preceding claims, **characterized in that** fastenings (B) are arranged on the outer sides of the sealing body segments (DS1, DS2, DS3) for fastening to a wall, mast or catenary wire.

14. Sealing body according to one of the preceding claims, **characterized in that** filler plugs (BS) can be inserted into unoccupied cable insertion openings (KE).

15. Sealing body according to one of the preceding claims, **characterized in that** unlocking elements (E) are arranged at the latching elements (RE).

16. Sealing body according to one of the preceding claims, **characterized in that** a resilient centring device for cables is arranged at each cable insertion opening (KE).

17. Sealing body according to Claim 16, **characterized in that** the centring device is formed by pointed tabs (ZE) directed conically inward into the cable insertion opening (KE).

18. Sealing body according to one of the preceding claims, **characterized in that** protruding brackets (BAB), for fastening the insertable cables, and slit-like guides (FAB), for lugs of the cable holding devices which can be fastened to the cables, are arranged at the inner outlets of the cable lead-ins (KE), the lugs of the cable holding devices, and consequently the cable holding device itself, being able to be displaced in the guides (FAB) for appropriate positioning.

## Revendications

1. Corps d'étanchéité pour des garnitures de câble divisées longitudinalement, se composant de plusieurs segments de corps d'étanchéité dans les plans de séparation desquels sont disposées des ouvertures d'insertion de câble et des dispositifs de dérivation de câble intégrés,
**caractérisé en ce que**
les segments de corps d'étanchéité (DS1, DS2, DS3) présentent des éléments d'encliquetage (RE, FL, FN) au moyen desquels les
segments de corps d'étanchéité (DS1, DS2, DS3) sont connectés les uns aux autres par encliquetage,
**en ce que** des blocs d'étanchéité déformables (DBAS, DBMS) sont disposés dans les régions des ouvertures d'insertion de câble (KE),
**en ce qu'**il est prévu des éléments de pression (DE) qui s'appliquent contre les blocs d'étanchéité (DBAS, DBMS) et peuvent presser contre ceux-ci en les déformant, afin de presser les blocs d'étanchéité (DBAS, DBMS) à leur tour, en fermant hermétiquement les ouvertures d'insertion de câble (KE), contre un câble pouvant être inséré et contre les segments de corps d'étanchéité (DS1, DS2, DS3),
**en ce qu'**au moins une rondelle élastique (FS) est prévue avec des éléments à ressort (FE) orientés coniquement dans les ouvertures d'insertion de câble (KE) pour la déformation des blocs d'-étanchéité, et **en ce que** l'on prévoit, dans la région de chaque ouverture d'insertion de câble (KE), des guides (FAB) dans lesquels sont insérées des coulisses (BAB) déplaçables perpendiculairement à la direction d'insertion des câbles, sur lesquelles coulisses (BAB) un câble insérable peut être fixé pour sa dérivation.

2. Corps d'étanchéité selon la revendication 1,
**caractérisé en ce que**
les blocs d'étanchéité (DBAS, DBMS) se composent d'une substance de type gel, de préférence de polyuréthane.

3. Corps d'étanchéité selon l'une quelconque des revendications précédentes, **caractérisé en ce que** les éléments à ressort (FE) de la rondelle élastique (FS) sont formés sous forme de languettes découpées en pointe.

4. Corps d'étanchéité selon l'une quelconque des revendications précédentes, **caractérisé en ce que** les éléments de pression (DE) présentent des évidements de forme courbe dans les faces de pression tournées vers les blocs d'étanchéité (DBAS, DBMS) dans les régions des ouvertures d'insertion de câble (KE), et
**en ce que** les éléments de pression (DE) peuvent être pressés contré les blocs d'étanchéité (DBAS, DBMS) au moyen de clavettes encliquetables (K) qui peuvent être enfoncées dans des plans obliques correspondants (SEDE) des éléments de pression (DE).

5. Corps d'étanchéité selon l'une quelconque des revendications précédentes, **caractérisé en ce que** l'on peut assembler deux segments de corps d'étanchéité de forme semi-circulaire avec un plan de séparation.

6. Corps d'étanchéité selon l'une quelconque des revendications 1 à 4, **caractérisé en ce que** l'on peut assembler deux segments de corps d'étanchéité de forme partiellement circulaire et une partie intermédiaire pour former un corps d'étanchéité (DK).

7. Corps d'étanchéité selon l'une quelconque des revendications précédentes, **caractérisé en ce qu'**au moins un cliquet (R) avec des éléments d'encliquetage (RE) et une barrette de guidage (FL) sont disposés dans les régions intermédiaires des segments de corps d'étanchéité extérieurs (DS1, DS3) et un logement de guidage (FA) avec des cliquets conjugués pour les éléments d'encliquetage (RE1, RE2) est disposé sur le segment de corps d'étanchéité intermédiaire (DS2) à raccorder.

8. Corps d'étanchéité selon l'une quelconque des revendications précédentes, **caractérisé en ce que** la rondelle élastique (FS) est également divisée de manière correspondant aux segments de corps d'étanchéité (DS1, DS2, DS3) et comprend deux demi-ouvertures d'insertion de câble disposées l'une à côté de l'autre.

9. Corps d'étanchéité selon l'une quelconque des revendications précédentes, **caractérisé en ce que** chaque bloc d'étanchéité (DBAS, BDMS) présente, dans les régions des ouvertures d'insertion de câble (KE), des renfoncements (KV) préformés s'étendant coniquement, correspondant aux éléments à ressort de centrage (FE), et des demi-ouvertures d'insertion de câble préformées (VKE).

10. Corps d'étanchéité selon l'une quelconque des revendications précédentes, **caractérisé en ce que** chaque bloc d'étanchéité (DBAS, DBMS) présente une rainure périphérique extérieure (ND) pour recevoir un élément de pression (DE).

11. Corps d'étanchéité selon l'une quelconque des revendications précédentes, **caractérisé en ce que** des cliquets (R) avec des éléments d'encliquetage (RE) sont disposés entre les ouvertures d'insertion de câble (KE) et à chaque fois sur des régions de bord extérieures des segments de corps d'étanchéité (DS1, DS2, DS3), les cliquets (R) saillant à chaque fois au-delà des plans de séparation (TR1, TR2) et pouvant être introduits lors de l'assemblage des segments de corps d'étanchéité (DS1, DS2, DS3) dans les cliquets conjugués correspondants (GR) du segment de corps d'étanchéité à raccorder.

12. Corps d'étanchéité selon l'une quelconque des revendications précédentes, **caractérisé en ce que** les segments de corps d'étanchéité extérieurs (DS1, DS3) présentent des saillies (AVS) pour la fixation de rails de connexion, qui servent à la fixation en position mutuelle de deux corps d'étanchéité frontaux.

13. Corps d'étanchéité selon l'une quelconque des revendications précédentes, **caractérisé en ce que** des fixations (B) sont disposées sur les côtés extérieurs des segments de corps d'étanchéité (DS1, DS2, DS3) pour la fixation à une paroi, un mât ou un câble porteur.

14. Corps d'étanchéité selon l'une quelconque des revendications précédentes, **caractérisé en ce que** des bouchons borgnes (BS) peuvent être insérés dans les ouvertures d'insertion de câble (KE) non garnies.

15. Corps d'étanchéité selon l'une quelconque des revendications précédentes, **caractérisé en ce que** des éléments de déverrouillage (E) sont disposés sur les éléments d'encliquetage (RE).

16. Corps d'étanchéité selon l'une quelconque des revendications précédentes, **caractérisé en ce qu'**un dispositif de centrage élastique pour câbles est disposé sur chaque ouverture d'insertion de câble (KE).

17. Corps d'étanchéité selon la revendication 16,
**caractérisé en ce que**
le dispositif de centrage est formé de languettes (ZE) se terminant en pointe, orientées coniquement vers l'intérieur dans l'ouverture d'insertion de câble (KE).

18. Corps d'étanchéité selon l'une quelconque des revendications précédentes, **caractérisé en ce que** l'on prévoit des arceaux (BAB) dépassant au niveau des sorties intérieures des insertions de câble (KE) pour la fixation du câble insérable et des guides en forme de fente (FAB) pour les saillies des dispositifs de dérivation de câble pouvant être fixés aux câbles, les saillies des dispositifs de dérivation de câble et ainsi le dispositif de dérivation de câble lui-même pouvant être déplacés dans les guides (FAB) en vue d'un positionnement correspondant.
